# FASCICULE DE BREVET EUROPEEN

(11) **EP 2 260 640 B1**
(45) Date de publication et mention de la délivrance du brevet: **10.05.2017**
(21) Numéro de dépôt: 09712236.0
(22) Date de dépôt: 04.02.2009
(51) Int. Cl.: H04M 1/725, H04W 12/06, H04W 88/02

(54) **ETABLISSEMENT D'UNE COMMUNICATION PAR PAQUETS ENTRE UN SERVEUR ET UNE ENTITE DE SERVICE D'UN RESEAU DE RADIOCOMMUNICATION**
AUFBAU EINER PAKETKOMMUNIKATION ZWISCHEN EINEM SERVER UND EINER DIENSTENTITÄT IN EINEM FUNKKOMMUNIKATIONSNETZ
PACKET COMMUNICATION SETUP BETWEEN A SERVER AND A SERVICE ENTITY IN A RADIOCOMMUNICATION NETWORK

(30) Priorité: 21.02.2008 FR 0851121
(43) Date de publication de la demande: 15.12.2010
(73) Titulaire: ALCATEL LUCENT, 92100 Boulogne-Billancourt (FR)
(72) Inventeur: SOULIE, Antoine, F-75014 Paris (FR); PINAULT, Francis, F-92270 Bois-colombes (FR)
(74) Mandataire: Berthier, Karine
(86) Numéro de dépôt international: PCT/FR2009/050167
(87) Numéro de publication internationale: WO 2009/103915

(56) Documents cités:
- WO-A-2006/079298
- US-A1- 2007 143 613
- US-B1- 6 957 060

## Description

La présente invention concerne un établissement d'une communication par paquets entre un serveur compris dans un réseau de paquets dispensant un service numérique et une entité de service incluant un équipement communicant dans un réseau de radiocommunication, l'entité de service ne contenant pas de module d'identification d'abonné, par exemple de type carte à puce.

Actuellement, un équipement communicant tel qu'un terminal mobile peut émettre et recevoir des données à travers un réseau de radiocommunication s'il est équipé d'un module d'identification d'abonné délivré par l'opérateur du réseau de radiocommunication. Par exemple, ce module est une carte SIM («Subscriber Identification Module » en anglais) comprenant des informations sur l'utilisateur du terminal mobile qui permettent à ce dernier d'être identifié par le réseau et par la suite d'être autorisé à émettre et recevoir des données à travers le réseau. En particulier, un terminal mobile doit être équipé d'une carte SIM pour accéder à un service multimédia via le réseau de radiocommunication par transmission de paquets de données.

De nombreuses sociétés disposent d'une flotte de terminaux mobiles utilisés par les employés dans un cadre professionnel. Généralement, chacun des terminaux mobiles est équipé d'une carte SIM associée à l'utilisateur du terminal mobile. Pour chaque terminal mobile, la facturation des communications effectuées est propre à l'utilisateur du terminal mobile. Par ailleurs, certaines sociétés possèdent des entités de service, telles que des véhicules automobiles ou de distributeurs de boissons, dotées d'équipements communicants. Les équipements communicants d'une telle société peuvent se connecter au moyen d'une carte SIM à un serveur géré par la société via un réseau de radiocommunication, par exemple pour informer la société des derniers événements survenus, tels qu'un incident occasionné à un véhicule automobile ou le besoin d'être approvisionné dans une sorte de boisson pour un distributeur de boissons.

La gestion des cartes SIM associées aux équipements communicants de telles sociétés est complexe et engendre des coûts élevés à ces sociétés, ou constitue un obstacle à certaines sociétés pour investir dans des équipements communicants.

Il existe donc un besoin pour les sociétés de disposer d'équipements communicants qui ne contiennent pas de carte SIM, notamment pour centraliser la facturation des communications par paquets relatives aux équipements communicants d'une même société.

Le brevet FR 2794917 décrit un téléphone mobile simplifié qui ne comporte pas de lecteur pour recevoir un module d'identification d'abonné. Le téléphone mobile simplifié est autorisé à accéder à un réseau public de radiocommunication pour recevoir ou émettre des appels, c'est-à-dire pour communiquer avec un autre téléphone mobile via un canal de communication dédié à la transmission de la voix en mode connecté.

WO2006/079298 A1 décrit un procédé de connexion à un réseau de paquets pour des équipement sans module d'identification d'abonné. Un objectif de l'invention est de remédier aux inconvénients précédents en établissant une communication par paquets entre un serveur et un équipement communicant ne contenant pas de module d'identification d'abonné.

Pour atteindre cet objectif, un procédé selon l'invention pour établir une communication par paquets entre un premier serveur relié à un réseau de paquets et une entité de service apte à communiquer sans module d'identification d'abonné dans un réseau de radiocommunication, est caractérisé en ce qu'il comprend les étapes suivantes :
une transmission d'un identificateur de l'entité de service depuis cette dernière à un deuxième serveur relié au réseau de paquets, une détermination d'une adresse du premier serveur en fonction de l'identificateur d'entité de service reçu dans le deuxième serveur et une transmission de l'adresse du premier serveur déterminée depuis le deuxième serveur à une passerelle interconnectant le réseau de radiocommunication et le réseau de paquets, et
un établissement par la passerelle d'une communication entre l'entité de service et le premier serveur en fonction de l'adresse du premier serveur déterminée.

Avantageusement, l'invention permet d'établir une communication par paquets entre un serveur et un équipement communicant au moyen d'une information sur l'entité de service incluant l'équipement communicant sans utiliser de module d'identification d'abonné. Une société peut ainsi souscrire à un seul abonnement pour les communications par paquets effectuées par l'ensemble des équipements communicants relatifs à la société, ce qui diminue les coûts de gestion de ces équipements communicants.

Selon une autre caractéristique de l'invention, l'adresse du premier serveur peut être déterminée si l'identificateur d'entité de service est inclus dans une table de correspondance associée à l'adresse du premier serveur. La table de correspondance peut être gérée par l'opérateur du réseau de radiocommunication et mise à jour selon des informations fournies par une société concernant les équipements communicants ot le premier serveur sous le contrôle de la société.

Selon une autre caractéristique de l'invention, le procédé peut comprendre en outre une transmission d'un identificateur d'un équipement communicant depuis l'entité de service au deuxième serveur, l'équipement communicant étant inclus dans l'entité de service et apte à communiquer avec le réseau de radiocommunication, et l'adresse du premier serveur peut être déterminée si l'identificateur d'entité de service et l'identificateur d'équipement communicant sont inclus dans une table de correspondance associée l'adresse du premier serveur.

Avantageusement, l'adresse du premier serveur peut être déterminée en fonction d'informations uniques et propres à l'équipement communicant et l'entité de service, telles que des numéros de série.

Selon une première réalisation de l'invention, le procédé peut comprendre en outre :
une transmission d'une première requête depuis l'entité de service à la passerelle,
suite à la réception de la première requête, une transmission d'une deuxième requête depuis la passerelle à l'entité de service, et
suite à la réception de la deuxième requête, une transmission d'une réponse contenant l'identificateur d'entité de service et une adresse du deuxième serveur depuis l'entité de service à la passerelle qui retransmet ces identificateurs au deuxième serveur en fonction de l'adresse du deuxième serveur.

Selon une deuxième réalisation de l'invention, le procédé peut comprendre en outre :
un appel depuis l'entité de service vers un serveur d'appel et relié au réseau de radiocommunication,
suite à la réception de l'appel, une transmission d'une requête depuis le serveur d'appel à l'entité de service, et
suite à la réception de la requête, une transmission d'une réponse contenant l'identificateur d'entité de service et une adresse du deuxième serveur depuis l'entité de service au serveur d'appel qui retransmet ces identificateurs au deuxième serveur en fonction de l'adresse du deuxième serveur.

Selon une autre caractéristique relative à la deuxième réalisation de l'invention, le procédé peut comprendre en outre :
une transmission de l'adresse du premier serveur déterminée depuis le deuxième serveur au serveur d'appel,
une détermination d'une identité temporaire de l'entité de service dans le serveur d'appel et une transmission de l'identité temporaire et de l'adresse du premier serveur déterminée depuis le serveur d'appel à l'entité de service, et
une transmission de l'identité temporaire et de l'adresse du premier serveur déterminée depuis l'entité de service à la passerelle.

L'identificateur d'équipement communicant peut être représentatif d'un numéro de série de l'équipement communicant.

L'invention concerne également une entité de service pour établir une communication par paquets entre un premier serveur relié à un réseau de paquets et l'entité de service, cette dernière étant apte à communiquer sans module d'identification d'abonné dans un réseau de radiocommunication, caractérisé en ce qu'elle comprend des moyens pour transmettre un identifcateur de l'entité de service depuis cette dernière à un deuxième serveur relié au réseau de paquets, afin que le deuxième serveur détermine une adresse du premier serveur en fonction de l'identificateur d'entité de service reçu et transmette l'adresse du premier serveur déterminée à une passerelle qui interconnecte le réseau de radiocommunication et le réseau de paquets et qui établit une communication entre l'entité de service et le premier serveur en fonction de l'adresse du premier serveur déterminée.

L'invention concerne aussi une passerelle interconnectant un réseau de radiocommunication et un réseau de paquets pour établir une communication par paquets entre un premier serveur relié au réseau de paquets et une entité de service apte à communiquer sans module d'identification d'abonné dans le réseau de radiocommunication, caractérisé en ce qu'il comprend :
des moyens pour transmettre une requête à l'entité de service suite à la réception d'une autre requête transmise depuis l'entité de service,
des moyens pour recevoir une réponse contenant un identificateur de l'entité de service et une adresse d'un deuxième serveur relié au réseau de paquets depuis l'entité de service et pour retransmettre ces identificateurs au deuxième serveur en fonction de l'adresse du deuxième serveur et
des moyens pour établir une communication entre l'entité de service et le premier serveur en fonction d'une adresse du premier serveur transmise par le deuxième serveur et déterminée par ce dernier en fonction de l'identificateur d'entité de service.

L'invention concerne encore un serveur pour établir une communication par paquets entre un premier serveur relié à un réseau de paquets et une entité de service apte à communiquer sans module d'identification d'abonné dans un réseau de radiocommunication, caractérisé en ce que le serveur est relié au réseau de paquets et en ce qu'il comprend :
des moyens pour recevoir un identificateur de l'entité de service depuis l'entité de service,
des moyens pour déterminer une adresse du premier serveur en fonction de l'identificateur d'entité de service reçu et transmettre l'adresse du premier serveur déterminée à une passerelle interconnectant le réseau de radiocommunication et le réseau de paquets, afin que la passerelle établisse une communication entre l'entité de service et le premier serveur en fonction de l'adresse du premier serveur déterminée.

La présente invention et les avantages qu'elle procure seront mieux compris au vu de la description ci-après faite en référence aux figures annexées, dans lesquelles:
- la figure 1 est un bloc-diagramme schématique d'un système de communication pour établir une communication par paquets entre un serveur et une entité de service selon l'invention ;
- la figure 2 est un algorithme d'un procédé pour établir une communication par paquets entre un serveur et une entité de service selon une première réalisation de l'invention ; et

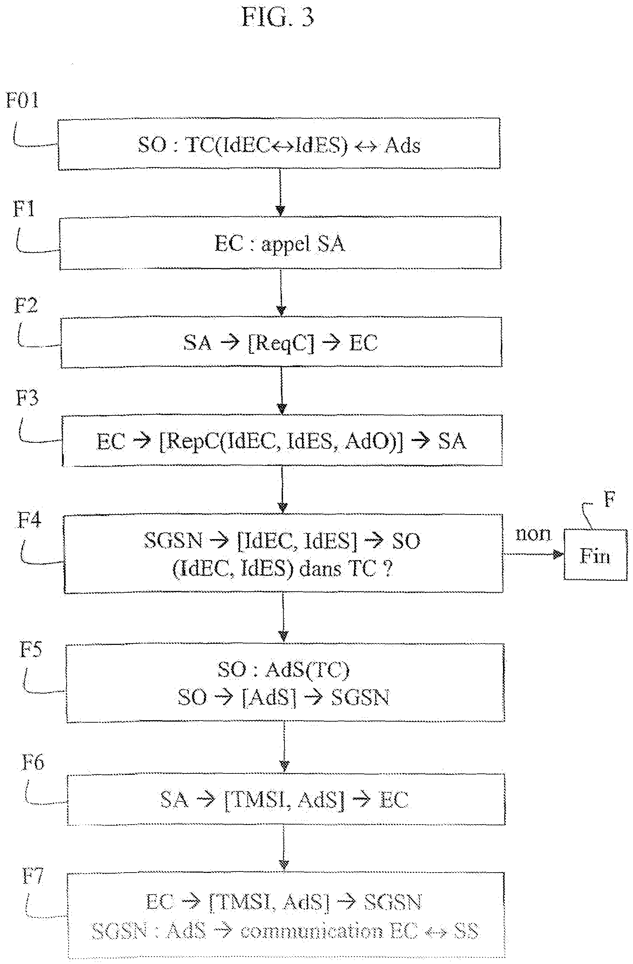

- la figure 3 est un algorithme schématique d'un procédé pour établir une communication par paquets entre un serveur et une entité de service selon une deuxième réalisation de l'invention.

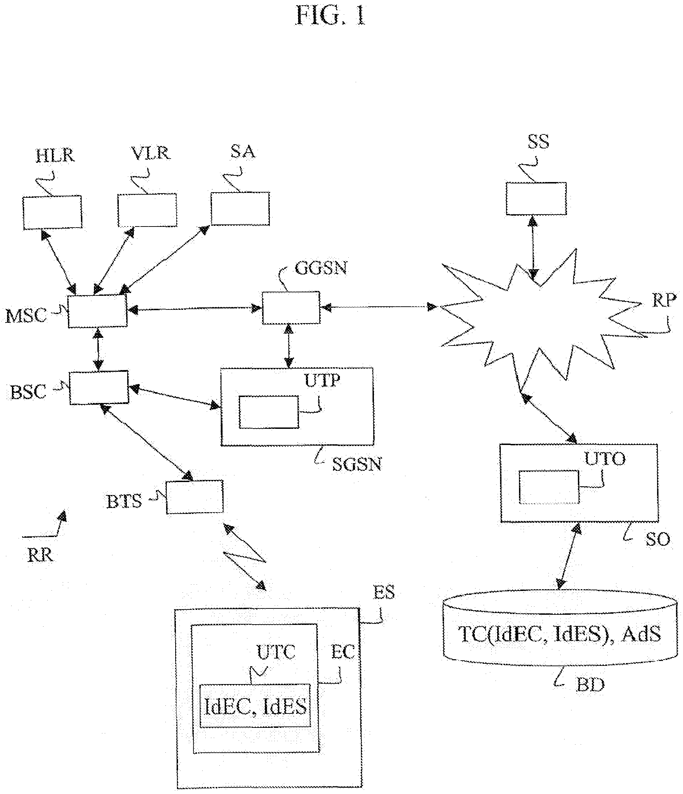

En référence à la figure 1, un système de communication selon l'invention comprend un réseau de radiocommunication RR, un réseau de paquets RP, un serveur d'opérateur SO relié à ou inclus dans le réseau de paquets RP et un équipement communicant EC qui est apte à fonctionner dans le réseau RR sans module d'identification d'abonné et qui est inclus dans une entité de service ES.

Par exemple, le réseau de radiocommunication RR est un réseau de radiocommunication cellulaire numérique de type GSM (« Global System for Mobile communications » en anglais) ou UMTS (« Universal Mobile Telecommunications System » en anglais). Le réseau de type GSM peut être accoté à un réseau GPRS (« General Packet Radio Service » en anglais) pour la transmission de données par paquets avec gestion de la mobilité et accès par voie radio. Le réseau de paquets RP est un réseau à haut débit de type IP, tel que l'internet. A titre d'exemple, le réseau de radiocommunication RR est apte à autoriser un équipement communicant, tel qu'un terminal mobile, à émettre et recevoir des données à travers le réseau RR lorsque l'utilisateur de l'équipement communicant est identifié auprès du réseau par l'intermédiaire d'un module d'identification d'abonné associé à l'équipement communicant.

Dans la figure 1 sont représentés des éléments de la zone de localisation du réseau RR de type GSM où l'équipement communicant est situé. La zone de localisation comprend un commutateur de service mobile MSC (« Mobile service Switching Center » en anglais) qui est relié à travers un contrôleur de station de base BSC (« Base Station Controller » en anglais) à une station de base BTS (« Base Transceiver Station » en anglais) connectée par une liaison radio à l'équipement communicant EC.

Le réseau RR comprend un enregistreur de localisation nominale HLR (« Home Location Register » en anglais) et un ou plusieurs enregistreurs de localisation VLR (« Visitor Location Register » en anglais) reliés au commutateur MSC. L'enregistreur HLR est similaire à une base de données contenant une identité internationale IMSI (« International Mobile Subscriber Identity » en anglais) associée à un profil d'abonnement de chaque usager du réseau RR. L'enregistreur VLR est un relais de l'enregistreur HLR et contient des caractéristiques des usagers situés dans la zone de localisation pour gérer la mobilité de ces derniers.

Dans le réseau RR de type GSM/GPRS, le contrôleur de station de base BSC et le commutateur MSC sont respectivement reliés à un noeud de service SGSN (« Serving GPRS Support Node » en anglais) et à un noeud-passerelle GGSN (« Gateway GPRS Support Node » en anglais). Selon l'invention, le serveur d'opérateur SO peut être relié directement ou indirectement au noeud-passerelle GGSN via un réseau de communication par paquets, par exemple l'internet. L'ensemble des noeuds SGSN et GGSN constitue une passerelle interconnectant le réseau de radiocommunication RR et le réseau de paquets RP. Le noeud de service SGSN comprend une unité de traitement UTP pour communiquer avec des serveurs du réseau de paquets RP et avec des entités du réseau de radiocommunication RR.

Le commutateur MSC peut être relié à un serveur d'appel SA dédié aux appels d'urgence Le serveur d'appel SA traite des appels d'urgence, tel qu'un appel correspondant au numéro « 112 », qui peuvent être composés depuis un quelconque terminal fixe ou mobile fonctionnant avec ou sans module d'identification d'abonné.

L'équipement communicant EC est inclus dans une entité de service ES qui appartient à une société. Une telle société peut posséder un ou plusieurs entités de service dotées chacune d'au moins un équipement communicant. A titre d'exemples, l'entité de service ES peut être un véhicule automobile appartenant à une société de taxis, ou bien un compteur automatique d'une énergie particulière, telle que l'eau, le gaz ou l'électricité appartenant à une société du secteur énergétique, ou encore un distributeur de boissons appartenant à une société spécialisée dans la distribution alimentaire. L'entité de service est donc un dispositif fixe ou mobile qui peut communiquer avec le réseau de radiocommunication RR par l'intermédiaire de l'équipement communicant.

L'équipement communicant EC, et par conséquent l'entité de service ES, est apte à fonctionner dans le réseau de radiocommunication RR sans utiliser de module d'identification d'abonné, contrairement à un téléphone mobile classique qui contient un lecteur de carte dans lequel est inséré un module d'identification d'abonné propre à l'usager En particulier, l'équipement communicant EC comprend une interface radio et une unité de traitement UTC contenant un processeur et des mémoires dans lesquelles sont stockés tous les paramètres radio nécessaires au fonctionnement l'équipement communicant EC. L'unité de traitement UTC contient notamment un identificateur IdES de l'entité de service et un identificateur IdEC de l'équipement communicant. Selon l'invention, l'équipement communicant peut contenir un module d'identification d'abonné, mais n'utilise pas ce module pour communiquer avec le réseau de radiocommunication RR.

Le serveur d'opérateur SO est compris dans le réseau GPRS du réseau de radiocommunication RR, c'est-à-dire est relié à ou inclus dans le réseau de paquets RP, et est apte à authentifier l'équipement communicant EC requérant l'établissement d'une communication par paquets avec un serveur de service SS.

Un serveur de service SS est géré par la société qui possède le ou les entités de service ES. Le réseau de paquets RP inclut au moins un serveur de service SS qui peut offrir un ou plusieurs services numériques accessibles depuis l'équipement communicant EC Un service numérique peut être un service fournissant des documents multimédias, tels que des fichiers numériques comprenant du texte et/ou du son et/ou une image, par exemple afin de mettre à jour des données numériques gérées par l'entité de service ES, telles que les prix de prestations offertes par l'entité de service. En outre, le serveur de service SS peut administrer une base de données contenant des informations relatives à chacune des entités de service appartenant à la société gérant le serveur SS. Par exemple, l'entité de service ES informe le serveur de service SS de dernières modifications produites, telles que le kilométrage du véhicule automobile ou le nombre de boissons restantes dans le distributeur de boissons.

Le serveur d'opérateur SO est lié à une base de données BD, qui est intégrée dans ce dernier ou incorporée dans un serveur de gestion de base de données relié au serveur SO par une liaison locale ou distante. La base de données BD comprend des informations relatives à l'invention, telles que des tables de correspondance TC comprenant des identificateurs d'entité de service IdES respectivement associés à des identificateurs d'équipement communicant IdEC. Chaque table de correspondance TC est associée à une adresse AdS d'un serveur de service SS, telle qu'une adresse IP. Chaque table de correspondance TC peut être associée en outre à un identificateur de la société gérant une flotte d'entités de service dont les identificateurs respectifs sont inclus dans la table TC. Le serveur d'opérateur SO comprend une unité de traitement UTO pour communiquer avec le réseau de paquets RP et pour analyser la base de données BD.

Dans une variante, le serveur d'opérateur SO et le serveur de service SS sont combinés en ou intégrés dans un unique serveur qui est en relation avec ou qui inclut la base de données BD.

Selon l'invention, un serveur dans le réseau de paquets RP peut référencer les communications établies entre l'équipement communicant EC et un serveur de service SS pour établir une facturation des services utilisés par l'équipement communicant EC.

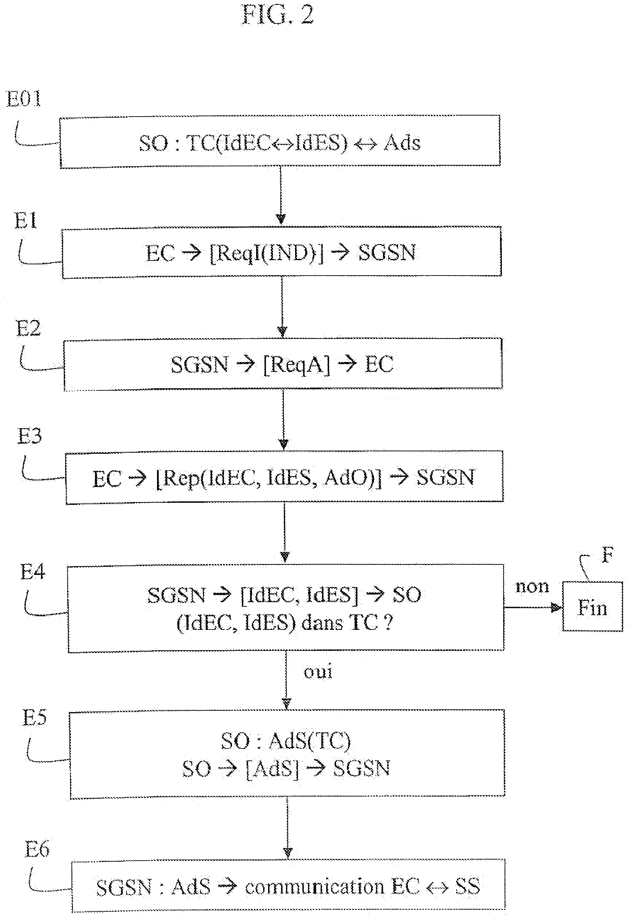

Selon une première réalisation en référence à la figure 2, le procédé d'établissement de communication par paquets selon l'invention comprend des étapes E1 à E6 exécutées automatiquement dans le système de communication selon l'invention.

A une étape préliminaire E01, le serveur d'opérateur SO prédéfinit des tables de correspondance TC qui comprennent chacune des identificateurs d'entité de service IdES respectivement associés à des identificateurs d'équipement communicant IdEC et qui sont respectivement associées à des adresses AdS de serveurs de service SS. Par exemple, un identificateur d'équipement communicant IdEC est une identité internationale d'équipement mobile IMEI (« International Mobile Equipment Identity » en anglais) représentative du numéro de série propre à t'équipement communicant, et un identificateur d'entité de service IdES est représentatif du numéro de série propre à l'entité de service, tel que le numéro d'immatriculation du véhicule automobile.

A l'étape E1, l'équipement communicant EC transmet une requête d'initialisation Reql au noeud de service SGSN afin d'être attaché au réseau GPRS. La requête Reql est transmise depuis l'équipement communicant EC au noeud de service SGSN successivement via la station de base BTS, le contrôleur de station de base BSC et le commutateur de service mobile MSC.

La transmission de la requête Reql déclenche une procédure appelée « GPRS Attach » qui permet d'établir un lien logique entre l'équipement communicant CC et le noeud SGSN et d'activer un contexte PDP (« Packet Data Network » en anglais) pour émettre et recevoir des données depuis l'équipement communicant EC. Un contexte PDP est un ensemble d'informations décrivant un service multimédia et comprenant des paramètres pour communiquer avec un serveur de service, selon un protocole spécifique, tel que le protocole IP ou X.25, et selon une qualité de service déterminée. Une procédure d'activation appelée « PDP Context Activation » permet à l'équipement communicant EC d'être connu du noeud-passerelle GGSN qui interconnecte le réseau de radiocommunication RR desservant l'équipement communicant EC avec le réseau de paquets RP comprenant le serveur de service SS.

La requête Reql contient un indicateur de service IND interprétable par le noeud de service SGSN pour déclencher une procédure similaire à une procédure d'appel d'urgence.

A l'étape E2, le noeud de service SGSN reçoit la requête Reql et lit l'indicateur de service IND contenu dans la requête reçue. Le noeud de service SGSN interprète l'indicateur IND comme une commande d'activation de contexte PDP sans recourir à l'identité internationale IMSI. Le noeud SGSN transmet alors une requête d'activation ReqA à l'équipement communicant EC.

A l'étape E3, en réponse à la réception de la requête d'activation ReqA, l'équipement communicant EC transmet une réponse Rep au noeud de service SGSN contenant un identificateur d'entité de service IdES, un identificateur d'équipement communicant IdEC et une adresse AdO du serveur d'opérateur SO. L'adresse AdO est par exemple une adresse IP du serveur SS.

A l'étape E4, le noeud de service SGSN interroge le serveur d'opérateur SO au moyen de l'adresse reçue AdO du serveur d'opérateur SO pour authentifier l'équipement communicant EC. A cette fin, le noeud de service SGSN retransmet l'identificateur d'entité de service IdES et l'identificateur d'équipement communicant IdEC au serveur d'opérateur SO qui recherche ces derniers dans les tables de correspondance TC de la base de données BD.

Si le couple constitué de l'identificateur d'entité de service IdES et de l'identificateur d'équipement communicant IdEC est inclus dans une table TC, le serveur d'opérateur SO détermine à l'étape E5 l'adresse AdS d'un serveur de service SS associée à la table trouvée TC et transmet l'adresse AdS au noeud de service SGSN, informant ce dernier que l'équipement communicant EC est authentifié. Si le couple précédent n'est pas inclus dans une table TC, le noeud de service SGSN refuse l'accès au service requis par l'équipement communicant EC qui n'est pas authentifié et le procédé se termine comme indiqué à une étape F

A l'étape E6, après l'authentification de l'équipement communicant EC, le noeud de service SGSN active le contexte PDP de l'équipement communicant EC, c'est-à-dire assigne une adresse IP à l'équipement communicant EC et ouvre un lien logique entre l'équipement communicant EC et le serveur de service SS désigné par l'adresse AdS pour que ces derniers communiquent entre eux.

Selon l'invention, une transmission d'informations de facturation sur un compte associé à l'équipement communicant EC est prévue. Par exemple, un serveur dédié au paiement peut tenir une liste d'identificateurs d'entité de service associée à un identificateur de la société à laquelle appartiennent les entités de service de la liste afin d'établir une facture globale pour ces entités de service au nom de ladite société.

Selon une deuxième réalisation en référence à la figure 2, le procédé d'établissement de communication par paquets selon l'invention comprend des étapes F1 à F7 exécutées automatiquement dans le système de communication selon l'invention.

A une étape préliminaire F01 similaire à l'étape E01, le serveur d'opérateur SO prédéfinit des tables de correspondance TC qui comprennent chacune des identificateurs d'entité de service IdES respectivement associés à des identificateurs d'équipement communicant IdEC et qui sont respectivement associées à des adresses AdS de serveurs de service SS.

A l'étape F1, l'équipement communicant EC émet un appel similaire à un appel d'urgence au serveur d'appel SA dédié aux appels d'urgence, via la station de base BTS, le contrôleur de station de base BSC et le commutateur de service mobile MSC relié au serveur SA. Par exemple, l'appel émis par l'équipement communicant EC correspond au numéro « 113 » reconnu par le serveur d'appel SA sans recourir à une identité internationale IMSI, comme l'appel d'urgence dont le numéro est « 112 ».

A l'étape F2, le serveur d'appel SA reçoit l'appel émis par l'équipement communicant et interprète cet appel comme une demande d'établissement d'une communication par paquets avec un serveur de service. Par exemple, le serveur d'appel SA détient une liste de numéros d'appel qui sont interprétés sans recourir à une identité internationale IMSI associée à l'équipement communicant ayant émis l'appel. Selon l'exemple précédent, la liste est restreinte au numéro d'appel « 113 ». Le serveur d'appel SA transmet une requête de confirmation ReqC à l'équipement communicant EC.

A l'étape F3, en réponse à la réception de la requête de confirmation ReqC, l'équipement communicant EC transmet une réponse de confirmation RepC au serveur d'appel SA contenant un identificateur d'entité de service IdES, un identifcateur d'équipement communicant IdEC et une adresse AdO du serveur d'opérateur SO, de manière similaire à l'étape E3.

A l'étape F4, le serveur d'appel SA interroge le serveur d'opérateur SO au moyen de l'adresse reçue AdO du serveur d'opérateur SO pour authentifier l'équipement communicant EC. A cette fin, le serveur d'appel SA retransmet l'identificateur d'entité de service IdES et l'identificateur d'équipement communicant IdEC au serveur d'opérateur SO qui recherche ces derniers dans la table de correspondance TC de la base de données BD, comme à l'étape E4.

Si les identificateurs IdES et IdEC sont inclus dans une table TC, le serveur d'opérateur SO détermine à l'étape F5 l'adresse AdS d'un serveur de service SS associée à la table trouvée TC et transmet l'adresse AdS au serveur d'appel SA, ce dernier étant alors informé que l'équipement communicant EC est authentifié. Si les identificateurs IdES et IdEC ne sont pas inclus dans une table TC, l'équipement communicant EC n'est pas authentifié et le procédé se termine comme indiqué à une étape F.

A l'étape F6, après l'authentification de l'équipement communicant EC, le serveur d'appel SA détermine une identité temporaire TMSI (« Temporary Mobile Station Identity » en anglais) de l'équipement communicants. L'identité temporaire TMSI permet d'identifier temporairement et localement l'équipement communicant EC auprès du commutateur MSC au moyen de l'enregistreur VLR. Le serveur d'appel SA transmet l'identité temporaire TMSI et l'adresse du serveur de service AdS à l'équipement communicant EC.

A l'étape F7, l'équipement communicant EC se connecte au noeud de service SGSN afin d'être attaché au réseau GPRS en transmettant l'identité temporaire TMSI et l'adresse du serveur de service AdS au noeud SGSN. Ce dernier assigne une adresse IP à l'équipement communicant EC et ouvre un lien logique entre l'équipement communicant EC et le serveur de service SS désigné par l'adresse AdS pour que ces derniers communiquent entre eux.

En variante, l'authentification de l'équipement communicant EC est exécutée au moyen de l'identificateur d'entité de service IdES uniquement. Dans ce cas, l'èquipement communicant EC transmet l'identificateur d'entité de service IdES et l'adresse AdO du serveur d'opérateur SO au noeud de service SGSN à l'étape E3 ou au serveur d'appel SA à l'étape F3.

Selon une autre variante, l'authentification de l'équipement communicant EC est exécutée au moyen d'un code en plus de l'identificateur d'entité de service IdES et de l'identificateur d'équipement communicant IdEC.

## Revendications

1. Procédé pour établir une communication par paquets entre un premier serveur (SS) relié à un réseau de paquets et une entité de service (ES) apte à communiquer sans module d'identification d'abonné dans un réseau de radiocommunication (RR), comprenant les étapes suivantes :
une transmission (E3-E4; F3-F4) d'un identificateur (IdES) de l'entité de service (ES) depuis cette dernière à un deuxième serveur (SO) relié au réseau de paquets,
une détermination (E5; F5) d'une adresse (AdS) du premier serveur (SS) en fonction de l'identificateur d'entité de service (IdES) reçu dans le deuxième serveur (SO) et une transmission (E5; F5-F7) de l'adresse du premier serveur déterminée (AdS) depuis le deuxième serveur (SO) à une passerelle (SGSN) interconnectant le réseau de radiocommunication (RR) et le réseau de paquets (RP), et
un établissement (E6; F7) par la passerelle (SGSN) d'une communication entre l'entité de service (ES) et le premier serveur (SS) en fonction de l'adresse du premier serveur déterminée (AdS).

2. Procédé conforme à la revendication 1, selon lequel l'adresse du premier serveur (AdS) est déterminée si l'identificateur d'entité de service (IdES) est inclus dans une table de correspondance (TC) associée à l'adresse du premier serveur (AdS).

3. Procédé conforme à la revendication 1, comprenant en outre une transmission (E3-E4; F3-F4) d'un identificateur (IdEC) d'un équipement communicant (EC) depuis l'entité de service (ES) au deuxième serveur (SO), l'équipement communicant étant inclus dans l'entité de service et apte à communiquer avec le réseau de radiocommunication, et selon lequel l'adresse du premier serveur (AdS) est déterminée si l'identificateur d'entité de service (IdES) et l'identificateur d'équipement communicant (IdEC) sont inclus dans une table de correspondance (TC) associée à l'adresse du premier serveur (AdS).

4. Procédé conforme à l'une des revendications 1 à 3, comprenant en outre :
une transmission (E1) d'une première requête depuis l'entité de service (ES) à la passerelle (SGSN),
suite à la réception de la première requête, une transmission (E2) d'une deuxième requête depuis la passerelle (SGSN) à l'entité de service (ES), et
suite à la réception de la deuxième requête, une transmission (E3) d'une réponse contenant l'identificateur d'entité de service (IdES) et une adresse (AdO) du deuxième serveur depuis l'entité de service (ES) à la passerelle (SGSN) qui retransmet l'identificateur d'entité de service au deuxième serveur (SO) en fonction de l'adresse du deuxième serveur (AdO).

5. Procédé conforme à l'une des revendications 1 à 3, comprenant en outre :
un appel (F1) depuis l'entité de service (ES) vers un serveur d'appel (SA) et relié au réseau de radiocommunication (RR),
suite à la réception de l'appel, une transmission (F2) d'une requête depuis le serveur d'appel (SA) à l'entité de service (ES), et
suite à la réception de la requête, une transmission (F3) d'une réponse contenant l'identificateur d'entité de service (IdES) et une adresse du deuxième serveur (AdO) depuis l'entité de service (ES) au serveur d'appel (SA) qui retransmet ledit identificateur d'entité de service au deuxième serveur (SO) en fonction de l'adresse du deuxième serveur (AdO).

6. Procédé conforme à la revendication 5, comprenant en outre :
une transmission (F5) de l'adresse du premier serveur déterminée (AdS) depuis le deuxième serveur (SO) au serveur d'appel (SA),
une détermination (F6) d'une identité temporaire (TMSI) de l'entité de service dans le serveur d'appel (SA) et une transmission de l'identité temporaire et de l'adresse du premier serveur déterminée (AdS) depuis le serveur d'appel (SA) à l'entité de service (ES), et
une transmission (F7) de l'identité temporaire et de l'adresse du premier serveur déterminée (AdS) depuis l'entité de service à la passerelle (SGSN).

7. Procédé conforme à l'une des revendications 3 à 6, selon lequel l'identificateur d'équipement communicant (IdEC) est représentatif d'un numéro de série de l'équipement communicant (EC).

8. Entité de service (ES) pour établir une communication par paquets entre un premier serveur (SS) relié à un réseau de paquets et l'entité de service (ES), cette dernière étant apte à communiquer sans module d'identification d'abonné dans un réseau de radiocommunication (RR), comprenant des moyens (UTC) pour transmettre un identificateur (IdES) de l'entité de service (ES) depuis cette dernière à un deuxième serveur (SO) relié au réseau de paquets, afin que le deuxième serveur détermine une adresse (AdS) du premier serveur (SS) en fonction de l'identificateur d'entité de service (IdES) reçu et transmette l'adresse du premier serveur déterminée (AdS) à une passerelle (SGSN) qui interconnecte le réseau de radiocommunication (RR) et le réseau de paquets (RP) et qui établit une communication entre l'entité de service (ES) et le premier serveur (SS) en fonction de l'adresse du premier serveur déterminée (AdS).

9. Passerelle (SGSN) interconnectant un réseau de radiocommunication (RR) et un réseau de paquets (RP) pour établir une communication par paquets entre un premier serveur (SS) relié au réseau de paquets et une entité de service (ES) apte à communiquer sans module d'identification d'abonné dans le réseau de radiocommunication (RR), comprenant :
des moyens (UTP) pour transmettre une requête à l'entité de service (ES) suite à la réception d'une autre requête transmise depuis l'entité de service (ES),
des moyens (UTP) pour recevoir une réponse contenant un identificateur (IdES) de l'entité de service (ES), et une adresse (AdO) d'un deuxième serveur (SO) relié au réseau de paquets depuis l'entité de service (ES) et pour retransmettre l'identificateur d'entité de service au deuxième serveur (SO) en fonction de l'adresse du deuxième serveur (AdO), et
des moyens (UTP) pour établir une communication entre l'entité de service (ES) et le premier serveur (SS) en fonction d'une adresse du premier serveur (AdS) transmise par le deuxième serveur (SO) et déterminée par ce dernier en fonction de l'identificateur d'entité de service (IdES).

10. Serveur (SO) pour établir une communication par paquets entre un premier serveur (SS) relié à un réseau de paquets et une entité de service (ES) apte à communiquer sans module d'identification d'abonné dans un réseau de radiocommunication (RR), le serveur (SO) étant relié au réseau de paquets et comprenant :
des moyens (UTO) pour recevoir un identificateur (IdES) de l'entité de service (ES) depuis l'entité de service (ES),
des moyens (UTO) pour déterminer une adresse (AdS) du premier serveur (SS) en fonction de l'identificateur d'entité de service (IdES) reçu et transmettre l'adresse du premier serveur déterminée (AdS) à une passerelle (SGSN) interconnectant le réseau de radiocommunication (RR) et le réseau de paquets (RP), afin que la passerelle établisse une communication entre l'entité de service (ES) et le premier serveur (SS) en fonction de l'adresse du premier serveur déterminée (AdS).

## Patentansprüche

1. Verfahren zum Herstellen einer paketvermittelte Kommunikation zwischen einem ersten, mit einem paketvermittelten Netzwerk verbundenen Server (SS) und einer Diensteinheit (Entite de Service, ES), die ausgelegt ist für die Kommunikation ohne Teilnehmeridentifikationsmodul in einem Funkkommunikationsnetz (Reseau de Radiocommunication, RR), die folgenden Schritte umfassend:
eine nachgeordnete Übertragung (E3-E4; F3-F4) einer Kennung (IdES) der Diensteinheit (ES) an einen zweiten mit dem paketvermittelten Netzwerk verbundenen Server (SO),
das Bestimmen (E5; F5) einer Adresse (AdS) des ersten Servers (SS) in Funktion der in dem zweiten Server '(SO) empfangenen Diensteinheitskennung (IdES) und eine Übertragung (E5; F5-F7) der ermittelten Adresse (AdS) des ersten Servers von dem zweiten Server (SO) an ein Gateway (SGSN), welches das Funkkommunikationsnetz (RR) mit dem paketvermittelten Netzwerk verbindet, und
das Herstellen (E6; F7) einer Kommunikation zwischen der Diensteinheit (ES) und dem ersten Server durch das Gateway (SGSN) in Funktion der ermittelten Adresse (AdS) des ersten Servers.

2. Verfahren nach Anspruch 1, wobei die Adresse des ersten Servers (AdS) ermittelt wird, wenn die Kennung der Diensteinheit (IdES) in einer Entsprechungstabelle (Table de Correspondance, TC) geführt wird, die mit der Adresse des ersten Servers (AdS) assoziiert ist.

3. Verfahren nach Anspruch 1, weiterhin eine Übertragung (E3-E4; F3-F4) einer Kennung (IdEC) einer Kommunikationsvorrichtung (Equipement Communicant, EC) von der Diensteinheit (ES) zum zweiten Server (SO) umfassend, wobei die Kommunikationsvorrichtung in die Diensteinheit integriert und dafür ausgelegt ist, um mit dem Funkkommunikationsnetz zu kommunizieren, und wobei gemäß dem Verfahren die Adresse des ersten Servers (AdS) ermittelt wird, wenn die Kennung der Diensteinheit (IdES) und die Kennung der Kommunikationsvorrichtung (IdEC) in einer Entsprechungstabelle (TC) enthalten sind, die mit der Adresse des ersten Servers (AdS) assoziiert ist.

4. Verfahren nach einem beliebigen der Ansprüche 1 bis 3, weiterhin umfassend:
eine Übertragung (E1) einer ersten Anfrage von der Diensteinheit (ES) an das Gateway (SGSN),
im Anschluss an den Empfang der ersten Anfrage die Übertragung (E2) einer zweiten Anfrage von dem Gateway (SGSN) an die Diensteinheit (ES), und
Im Anschluss an den Empfang der zweiten Anfrage eine Übertragung (E3) einer die Kennung der Diensteinheit (IdES) und einer Adresse (AdO) des zweiten Servers enthaltenden Antwort von der Diensteinheit (ES) an das Gateway (SGSN), welches die Kennung der Diensteinheit in Funktion der Adresse des zweiten Servers (AdO) an den zweiten Server (SO) weiterleitet.

5. Verfahren nach einem beliebigen der Ansprüche 1 bis 3, weiterhin umfassend:
einen Anruf (F1) der Diensteinheit (ES) an einen mit dem Funkkommunikationsnetz (RR) verbundenen Anrufserver (Serveur d'Appel, SA),
im Anschluss an den Empfang des Anrufs eine Übertragung (F2) einer Anfrage durch den Anrufserver (SA) an die Diensteverteilungspunkt, und
Im Anschluss an den Empfang der Anfrage eine Übertragung (F3) einer die Kennung der Diensteinheit (IdES) und einer Adresse des zweiten Servers (AdO) enthaltenden Antwort von der Diensteinheit (ES) an den Anrufserver (SA), welcher die Kennung der Diensteinheit in Funktion der Adresse des zweiten Servers (AdO) an den zweiten Server (SO) weiterleitet.

6. Verfahren nach Anspruch 5, weiterhin umfassend:
eine Übertragung (F5) der ermittelten Adresse des ersten Servers (AdS) von dem zweiten Server (SO) an den Anrufserver (SA),
eine Bestimmung (F6) einer vorübergehenden Identität (TMSI) der Diensteinheit in dem Anrufserver (SA) und eine Übertragung der vorübergehenden Identität und der ermittelten Adresse des ersten Servers (AdS) von dem Anrufserver (SA) an die Diensteinheit (ES), und
eine Übertragung (F7) der vorübergehenden Identität und der ermittelten Adresse des ersten Servers (AdS) von der Diensteinheit an das Gateway (SGSN).

7. Verfahren nach einem jeglichen der Ansprüche 3 bis 6, wobei die Kennung der Kommunikationsvorrichtung (IdEC) eine Seriennummer der Kommunikationsvorrichtung (EC) repräsentiert.

8. Diensteinheit (ES) zum Herstellen einer paketvermittelte Kommunikation zwischen einem ersten, mit einem paketvermittelten Netzwerk verbundenen Server (SS) und der Diensteinheit (ES), wobei letztere ausgelegt ist für die Kommunikation ohne Teilnehmeridentifikationsmodul in einem Funkkommunikationsnetz (RR), Folgendes umfassend:
Mittel (UTC) zur Übermittlung einer Kennung (IdES) der Diensteinheit (ES) von letzterer zu einem zweiten, mit dem paketvermittelten Netzwerk verbundenen Server (SO), damit der zweite Server in Funktion der empfangenen Kennung der Diensteinheit (IdES) eine Adresse (AdS) des ersten Servers (SS) ermittelt und die ermittelte Adresse des ersten Servers (AdS) an ein Gateway (SGSN) übermittelt, welches das Funkkommunikationsnetz (RR) und das paketvermittelte Netzwerk (RP) miteinander verbindet und welche in Funktion der ermittelten Adresse des ersten Servers (AdS) eine Kommunikation zwischen der Diensteinheit (ES) und dem ersten Server (SS) herstellt.

9. Ein Gateway (SGSN), das ein Funkkommunikationsnetz (RR) mit einem paketvermittelten Netzwerk verbindet, zum Herstellen einer Paketkommunikation zwischen einem ersten, mit dem paketvermittelten Netzwerk verbundenen Server (SS) und einer Diensteinheit (ES), ausgelegt für die Kommunikation ohne Teilnehmeridentifikationsmodul in einem Funkkommunikationsnetz (RR), umfassend:
Mittel (UTP) für das Übermitteln einer Anfrage an die Diensteinheit (ES) im Anschluss an den Empfang einer weiteren, von der Diensteinheit (ES) übermittelten Anfrage,
Mittel (UTP) für den Empfang einer eine Kennung (IdES) der Diensteinheit enthaltenden Antwort und einer Adresse (AdO) eines zweiten Servers (SO), der verbunden ist mit dem paketvermittelten Netzwerk, von der Diensteinheit (ES) und für das Weiterleiten der Kennung der Diensteinheit an den zweiten Server (SO) in Funktion der Adresse des zweiten Servers (AdO), und
Mittel (UTP) für das Herstellen einer Kommunikation zwischen der Diensteinheit (ES) und dem ersten Server (SS) in Funktion einer Adresse des ersten Servers (AdS), die von dem zweiten Server (SO) übermittelt und von letzterem in Funktion der Kennung der Diensteinheit (IdES) ermittelt wurde.

10. Server (SO) zum Herstellen einer paketvermittelte Kommunikation zwischen einem ersten, mit einem paketvermittelten Netzwerk verbundenen Server (SS) und einer Diensteinheit (Entite de Service, ES), die ausgelegt ist für die Kommunikation ohne Teilnehmeridentifikationsmodul in einem Funkkommunikationsnetz (RR), wobei der Server (SO) mit dem paketvermittelten Netzwerk verbunden ist und umfasst:
Mittel (UTO) für den Empfang einer Kennung (IdES) der Diensteinheit (ES) von der Diensteinheit (ES).
Mittel (UTC), um in Funktion der empfangenen Kennung der Diensteinheit (IdES) eine Adresse (AdS) des ersten Servers (SS) zu ermitteln und die ermittelte Adresse des ersten Servers (AdS) an ein Gateway (SGSN) zu übermitteln, welches das Funkkommunikationsnetz (RR) und das paketvermittelte Netzwerk (RP) miteinander verbindet, damit das Gateway in Funktion der ermittelten Adresse des ersten Servers (AdS) eine Kommunikation zwischen der Diensteinheit (ES) und dem ersten Server (SS) herstellt.

## Claims

1. A method for establishing a packet communication between a first server (SS) connected to a packet network and a service entity (ES) able to communicate without a subscriber identification module in a radio communication network (RR), comprising the following steps:
transmitting (E3-F4; F3-F4) an identifier (IdES) of the service entity (ES) from that entity to a second server (SO) connected to the packet network,
determining (E5; F5) an address (AdS) of the first server (SS) based on the service entity identifier (IdES) received in the second server (SO) and a transmission (E5; F5-F7) of the address of the first determined server (AdS) from the second server (SO) to a gateway (SGSN) interconnecting the radio communication network (RR) and the packet network (RP), and
establishing (E6; F7), by the gateway (SGSN), a communication between the service entity (ES) and the first server (SS) based on the address of the first determined server (AdS).

2. A method according to claim 1, whereby the address of the first server (AdS) is determined if the service entity identifier (IdES) is included in a lookup table (TC) associated with the address of the first server (AdS).

3. A method according to claim 1, further comprising a transmission (E3-F4; F3-F4) of an identifier (IdEC) of a communicating device (EC) from the service entity (ES) to the second server (SO), the communicating device being included in the service entity and able to communicate with the radio communication network, and whereby the address of the first server (AdS) is determined if the service entity identifier (IdES) and the communicating device identifier (IdEC) are included in a lookup table (TC) associated with the address of the first server (AdS).

4. A method according to one of the claims 1 to 3, further comprising:
transmitting (E1) a first request from the service entity (ES) to the gateway (SGSN),
following receipt of the first request, transmitting (E2) a second request from the gateway (SGSN) to the service entity (ES), and
following receipt of the second request, transmitting (E3) a response containing the service entity identifier (IdES) and an address (AdO) of the second server from the service entity (ES) to the gateway (SGSN), which retransmits the service entity identifier to the second server (SO) based on the address of the second server (AdO).

5. A method according to one of the claims 1 to 3, further comprising:
a call (F1) from the service entity (ES) to a call server (SA) and connected to the radio communication network (RR),
after the call is received, transmitting (F2) a request from the call server (SA) to the service entity (ES), and
after the request is received, transmitting (F3) a response containing the service entity identifier (IdES) and an address of the second server (AdO) from the service entity (ES) to the call server (SA), which retransmits said service entity identifier to the second server (SO) based on the address of the second server (AdO).

6. A method according to claim 5, further comprising:
transmitting (F5) the address of the determined first server (AdS) from the second server (SO) to the call server (SA),
determining (F6) a temporary identity (TMSI) of the service entity within the call server (SA) and transmitting the temporary identity and the address of the determined first server (AdS) from the call server (SA) to the service entity (ES), and
transmitting (F7) the temporary identity and the address of the determined first server (AdS) from the service entity to the gateway (SGSN).

7. A method according to any one of the claims 3 to 6, whereby the communicating device identifier (IdEC) is representative of a serial number of the communicating device (EC).

8. A service entity (ES) for establishing a packet communication between a first server (SS) connected to a packet network and a service entity (ES) able to communicate without a subscriber identification module in a radio communication network (RR), comprising:
means (UTC) for transmitting an identifier (IdES) of the service entity (ES) from that entity to a second server (SO) connected to the packet network, so that the second server can determine an address (AdS) of the first server (SS) based on the service entity identifier (IdES) received and transmit the address of the first determined server (AdS) to a gateway (SGSN) interconnecting the radio communication network (RR) and the packet network (RP), and which establishes a communication between the service entity (ES) and the first server (SS) based on the address of the first determined server (AdS).

9. A gateway (SGSN) interconnecting a radio communication network (RR) and a packet network (RP) for establishing a packet communication between a first server (SS) connected to a packet network and a service entity (ES) able to communicate without a subscriber identification module in the radio communication network (RR), comprising:
means (UTP) for transmitting a request to the service entity (ES) following receipt of another request from the service entity (ES),
means (UTP) for receiving a response containing a service entity (ES) identifier (IdES), and an address (AdO) of a second server (SO) connected to the packet network from the service entity (ES) and for retransmitting the service entity identifier to the second server (SO) based on the address of the second server (AdO), and
means (UTP) for establishing the communication between the service entity (ES) and the first server (SS) based on an address of the first server (AdS) transmitted by the second server (SO) and determined by that server based on the service entity identifier (IdES).

10. A server (SO) for establishing a packet communication between a first server (SS) connected to a packet network and a service entity (ES) able to communicate without a subscriber identification module in a radio communication network (RR), the server (SO) being connected to the packet network and comprising:
means (UTO) for receiving an identifier (IdES) of the service entity (ES) from the service entity (ES),
means (UTO) for determining an address (AdS) of the first server (SS) based on the service entity identifier (IdES) received, and transmitting the address of the first determined server (AdS) to a gateway (SGSN) interconnecting the radio communication network (RR) and the packet network (RP), so that the gateway establishes a communication between the service entity (ES) and the first server (SS) based on the address of the determined first server (AdS).
